# FASCICULE DE BREVET EUROPEEN

(11) **EP 4 107 397 B1**
(45) Date de publication et mention de la délivrance du brevet: **26.06.2024**
(21) Numéro de dépôt: 20790341.0
(22) Date de dépôt: 21.10.2020
(51) Int. Cl.: F04B 15/08, F04B 23/02, F04B 53/12, F04B 53/16, F04B 7/04

(54) **APPAREIL DE COMPRESSION ET STATION DE REMPLISSAGE COMPRENANT UN TEL APPAREIL**
VERDICHTUNGSGERÄT UND BEFÜLLSTATION MIT EINEM SOLCHEN GERÄT
COMPRESSION APPARATUS AND FILLING STATION COMPRISING SUCH AN APPARATUS

(30) Priorité: 21.02.2020 FR 2001725
(43) Date de publication de la demande: 28.12.2022
(73) Titulaire: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventeur: BENISTAND-HECTOR, Cyril, 38360 SASSENAGE (FR); PETITPAS, Guillaume, 38360 SASSENAGE (FR)
(74) Mandataire: Air Liquide
(86) Numéro de dépôt international: PCT/EP2020/079583
(87) Numéro de publication internationale: WO 2021/164900

(56) Documents cités:
- US-A- 495 348
- US-A- 3 136 136
- US-A- 3 254 607
- US-A1- 2014 054 318
- US-B2- 7 410 348

## Description

L'invention concerne un appareil de compression de fluide cryogénique ainsi qu'une station de remplissage comprenant un tel appareil.

L'invention concerne plus particulièrement un appareil de compression de fluide à un étage de compression comprenant un carter abritant une chambre de compression, un système d'admission communiquant avec la chambre de compression configuré pour permettre l'entrée de fluide à comprimer dans ladite chambre de compression, un piston mobile pour assurer la compression du fluide dans la chambre de compression, l'appareil comprenant en outre un orifice d'évacuation configuré pour permettre la sortie de fluide comprimé de la chambre de compression, la chambre de compression étant délimitée par une portion du corps du piston et une paroi fixe de l'appareil, le piston étant mobile en translation selon une direction longitudinale.

L'invention concerne en particulier un appareil de compression ou de pompage de gaz et/ou liquides cryogéniques.

Dans la suite, notamment les termes « appareil de compression », « pompe » peuvent être utilisés indistinctement de même que pour les termes « pompage » et « compression ». L'appareil objet de l'invention concerne en effet un appareil de pompage et/ou de compression de fluide cryogénique liquide et/ou gazeux et/ou supercritique.

Les fluides cryogéniques présentent des densités beaucoup plus élevées que les fluides gazeux. Par conséquent, les pompes cryogéniques (par opposition aux compresseurs à gaz) offrent des débits massiques plus importants, un volume plus petit, consomment moins d'énergie et nécessitent moins d'entretien. C'est pourquoi les pompes cryogéniques sont utilisées dans de nombreux domaines tels que les unités de séparation des gaz de l'air, les reformeurs, les stations de remplissage, les secteurs maritimes.

Les fluides concernés comprennent généralement l'oxygène, l'azote, le gaz naturel, l'argon, l'hélium ou l'hydrogène. Ces appareils de compression (ou pompes) ont pour fonction de pressuriser un fluide cryogénique à un débit cible.

Par exemple, une pompe à piston cryogénique peut être placée directement en ligne à la sortie du stockage source cryogénique ou encore dans un bain cryogénique dédié (également appelé "sump" en anglais), situé à côté et directement alimenté par un réservoir de stockage principal.

Pour diverses raisons, notamment la commodité de l'entretien et de la conception, généralement la pompe cryogénique est à mouvement alternatif et est insérée dans un réservoir de sorte à être immergée dans le fluide cryogénique à pomper.

Les pompes cryogéniques ont généralement des pressions d'entrée comprises entre 1 et 12 bars et des pressions de sortie de 200 à 1000 bar, selon l'application. Les pompes peuvent comporter un ou plusieurs étages de compression en utilisant un mouvement de va-et-vient.

Les principaux indicateurs de performance des pompes cryogéniques à piston sont : le rendement volumétrique, les pertes par évaporation, la consommation d'énergie, l'empreinte au sol et la durabilité.

Les principales caractéristiques des pompes cryogéniques à mouvement alternatif devraient donc être :
- une densité la plus élevée possible à l'aspiration,
- une très bonne isolation thermique avec l'environnement,
- un volume mort minimal (c'est-à-dire un taux de compression élevé), un montage simple et robuste pour une maintenance rapide et une fiabilité élevée,
- une bonne gestion des pertes par évaporation afin de limiter leur impact.

Le document US7410348 décrit une pompe à deux étages de compression à piston horizontale avec une admission axiale par un clapet anti-retour et une décharge radiale. Cette architecture présente un volume mort relativement conséquent. De plus, les pertes de fuites sont relativement importantes au niveau de deux systèmes de joints à haute pression situés de part et d'autre de la chambre à haute pression.

Ceci provoque également un montage et un entretien plus difficiles.

Les documents US 3 254 607 A et US 495 348 A divulguent d'autres pompes connues dans l'état de la technique.

Un but de la présente invention est de pallier tout ou partie des inconvénients de l'art antérieur relevés ci-dessus.

A cette fin, l'appareil de compression selon l'invention, par ailleurs conforme à la définition générique qu'en donne le préambule ci-dessus, est essentiellement caractérisé en ce que le piston comporte une portion tubulaire montée autour un guide central fixe, une première extrémité terminale du guide central formant la paroi fixe délimitant une partie de la chambre de compression, l'appareil comprenant un système d'étanchéité formé entre le guide central et le piston, selon la direction longitudinale de translation du piston, le système d'admission est situé à une première extrémité de l'appareil, l'orifice d'évacuation étant situé à une seconde extrémité de l'appareil. Par ailleurs, des modes de réalisation de l'invention peuvent comporter l'une ou plusieurs des caractéristiques suivantes :
- l'intégralité de la chambre de compression est contenue dans la portion tubulaire du piston,
- en configuration de fonctionnement de l'appareil de compression, la direction longitudinale de translation du piston est verticale, le système d'admission étant située à une extrémité inférieure de l'appareil, l'orifice d'évacuation étant situé à une extrémité supérieure de l'appareil,
- en configuration de fonctionnement de l'appareil de compression, la direction longitudinale de translation du piston est verticale, le système d'admission étant située à une extrémité inférieure de l'appareil, l'orifice d'évacuation étant situé à une extrémité supérieure de l'appareil,

- selon la direction longitudinale, une première extrémité de la chambre de compression est délimitée par une première extrémité du piston tubulaire et une seconde extrémité de la chambre de compression est délimitée par la première extrémité terminale du guide central et le système d'étanchéité formé entre le guide central et le piston, ledit le système d'étanchéité étant situé au niveau ou adjacent à la première extrémité terminale du guide central,
- le système d'étanchéité formé entre le guide central et le piston est situé uniquement au niveau de la seconde extrémité de la chambre de compression et/ou au-delà de cette seconde extrémité en direction de la seconde extrémité de l'appareil selon la direction longitudinale,
- l'orifice d'évacuation est situé au niveau de la première extrémité terminale du guide central, l'appareil comprenant une conduite d'évacuation du gaz comprimé comprenant une première extrémité reliée à l'orifice d'évacuation et une seconde extrémité située au niveau de la seconde extrémité de l'appareil,
- le système d'admission est situé à une première extrémité du piston,
- le système d'admission comprend au moins l'un parmi: un ou plusieurs clapets anti-retour, un ou plusieurs orifices ou lumière(s), au moins un clapet à disque plat ou vanne(s) configurés pour assurer l'entrée de fluide à comprimer dans la chambre de compression lors d'une phase d'admission et empêcher la sortie de fluide en phase de compression,
- la compression du fluide dans la chambre de compression est provoquée par une course du piston en direction de la seconde extrémité de l'appareil,
- l'appareil est logé dans une enceinte étanche contenant un bain de fluide cryogénique de refroidissement.

L'invention concerne également une station de remplissage de réservoirs de gaz sous pression comprenant une source de gaz liquéfié, notamment d'hydrogène liquéfié, un circuit de soutirage ayant une première extrémité reliée à la source et au moins une seconde extrémité destinée à être raccordée à un réservoir à remplir, le circuit de soutirage comprenant un appareil de pompage ou un appareil de compression de fluide conforme à l'une quelconque des caractéristiques ci-dessus ou ci-dessous.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue en coupe longitudinale et verticale, schématique et partielle, illustrant la structure d'un exemple de réalisation d'un appareil de compression selon l'invention,

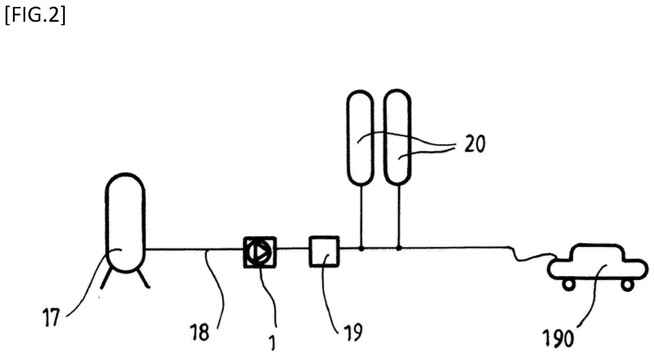

[Fig. 2] représente une vue schématique et partielle, illustrant un exemple de station de remplissage utilisant un tel appareil de compression.

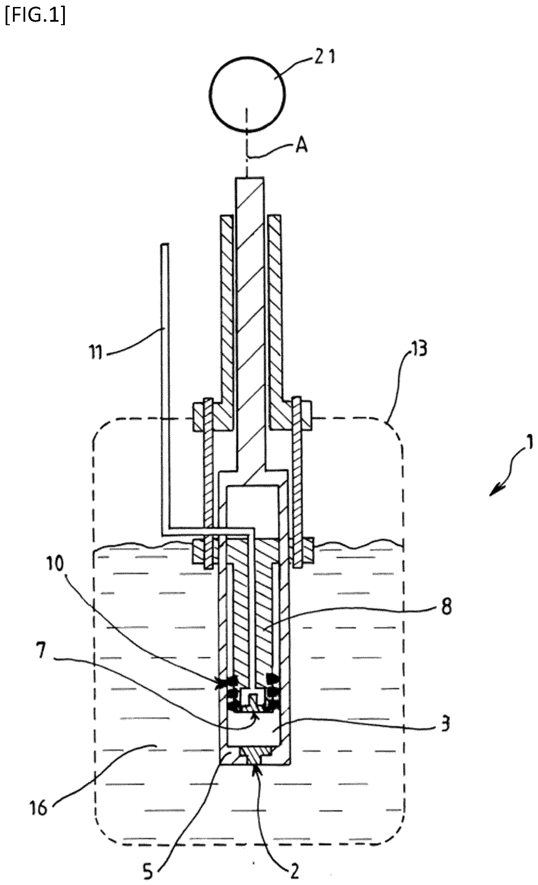

L'appareil 1 de compression de fluide représenté à la [Fig. 1] comprend un unique étage de compression.

L'appareil 1 comprend en particulier une chambre 3 de compression.

L'appareil 1 comprend un système 2 d'admission communiquant avec la chambre 3 de compression et qui est configuré pour permettre l'entrée de fluide à comprimer dans ladite chambre 3 de compression. Le système 2 d'admission peut comprendre par exemple au moins l'un parmi : un ou plusieurs clapets anti-retour, un ou plusieurs orifices ou lumière(s), au moins un clapet à disque plat ou tout autre dispositif ou vanne permettant l'entrée de fluide à comprimer dans la première chambre 3 de compression lors d'une phase d'admission et empêchant la sortie de fluide en phase de compression. En particulier, dans un mode de réalisation possible, ce système 2 d'admission peut s'ouvrir en cas de différentiel de pression déterminé entre ses deux extrémités. De plus, la chambre peut éventuellement être équipée d'une soupape ou autre élément de sécurité configuré pour limiter la pression au sein de la chambre en dessous d'un seuil de sécurité déterminé. L'appareil 1 comprend un piston 5 mobile en translation pour assurer la compression du fluide dans la chambre 3 de compression (comme détaillé ci-après).

L'appareil 1 comprend en outre un orifice 7 d'évacuation communiquant avec la chambre 3 de compression et configuré pour permettre la sortie de fluide comprimé dans la chambre 3 de compression (pendant ou en fin de phase de compression dans cette chambre). L'orifice 7 d'évacuation peut être pourvu d'un système anti-retour qui peut être du même type que celui du système 2 d'admission (par exemple fermé tant que le différentiel de pression entre la chambre 3 de compression et l'extérieur est inférieur à un seuil déterminé).

La chambre 3 de compression est délimitée par une portion du corps du piston 5 et une paroi fixe de l'appareil. Le piston 5 est mobile en translation selon une direction A longitudinale.

Le piston 5 comporte de préférence, à une première extrémité, une portion tubulaire montée autour d'un guide 8 central fixe.

Comme illustré, la chambre 3 de compression peut être formée dans une cavité tubulaire ou chambre fixe dans le piston 5 et qui est close à cette première extrémité. La chambre 3 de compression peut être délimitée ainsi en partie inférieure par une extrémité inférieure tubulaire close du piston 5. Le système 2 d'admission peut être situé à une extrémité inférieure du piston 5.

L'extrémité arrière du piston 5 peut être montée coulissante par rapport à un plateau transversal fixe maintenu par des montants longitudinaux. La structure du piston 5 est conformée pour permettre dans ce cas le coulissement d'une partie (la partie arrière) du piston 5 dans ledit plateau (ou autre (s) support (s)) .

Par exemple, la portion inférieure du piston 5 est tubulaire (et forme la chambre 3 de compression) tandis que la partie opposée (supérieure) du piston 5 est conformée pour permettre le coulissement par rapport au plateau support. Par exemple, la partie supérieure du piston 5 comporte une ou des ouvertures permettant le passage du plateau ou support. Le piston 5 peut être réalisé en une ou plusieurs pièces assemblées/solidarisées.

Une première extrémité terminale du guide 8 central peut former la paroi fixe délimitant une seconde extrémité de la chambre 3 de compression. Le reste de la chambre 3 de compression est délimité par un système d'étanchéité 10 (segments ou autre) formé entre le guide 8 central et le piston 5. A noter que ce système d'étanchéité 10 est situé au niveau ou au-delà de l'extrémité terminale du guide 8 central, en direction de la seconde extrémité du dispositif 1.

C'est-à-dire que la portion tubulaire du piston 5 forme une enceinte entourant toute la chambre 3 de compression. Ainsi la chambre 3 de compression peut être contenue entièrement dans la portion tubulaire du piston 5. Ainsi le piston 5 peut constituer le carter de la chambre 3 de compression. Cette architecture permet de confiner la chambre 3 de compression dans le piston 5 dont les parois peuvent être thermalisées (c'est-à-dire maintenues en froid) efficacement comme décrit ci-après.

Cette architecture permet ainsi de prévoir un unique système d'étanchéité dynamique à haute pression à une seule extrémité de la chambre 3 de compression. Ainsi, le système d'étanchéité 10 formé entre le guide 8 central et le piston 5 peut être situé uniquement au niveau de la seconde extrémité (de préférence supérieure) de la chambre 3 de compression..

De préférence, en configuration de fonctionnement de l'appareil 1, la direction A longitudinale de translation du piston 5 est verticale, le système 2 d'admission étant situé à une extrémité inférieure de l'appareil 1. L'orifice 7 d'évacuation est situé quant à lui dans une partie supérieure de l'appareil 1, c'est-à-dire au-dessus du système 2 d'admission.

Cette configuration assure une admission de fluide à comprimer dans la partie inférieure (première extrémité), c'est-à-dire dans la région la plus froide de l'appareil 1. De plus, le refoulement et les éventuelles fuites sont localisées dans la région supérieure de l'appareil (seconde extrémité). Cette configuration favorise un mélange minimal ou nul entre les deux régions relativement froide et chaude.

Cet agencement avec course de compression permet une bonne séparation longitudinale des flux de fluide relativement froid (à l'admission de préférence en partie inférieure) et chaud (à l'échappement de préférence en partie supérieure). En particulier, la course de compression dans la chambre 3 de compression est de préférence ascendante (traction de la tige du piston 5 vers le haut et vers la partie chaude de l'appareil 1).

En particulier, cette course en traction et de préférence ascendante du piston 5 lors de la compression à haute pression génère un effort de traction sur la tige du piston. Ceci est favorable mécaniquement. En effet, la tige n'est pas soumise au flambement lors de cette traction (au contraire d'une compression/ poussée). De plus, cet agencement de compression en traction ne nécessite pas de guider la tige de piston régulièrement sur sa longueur. Ceci permet en outre de réduire la surface de la section de la tige de piston (en évidant la tige ou en réduisant son diamètre par exemple). De plus, ceci permet de réduire la longueur de la tige de piston selon le niveau de pertes thermiques acceptable.

Comme schématisé, le piston 5 peut être entraîné par un organe d'actionnement 21 (par exemple un organe moteur) situé en partie supérieure (seconde extrémité de l'appareil 1) c'est-à-dire que le moteur 21 ou actionneur est situé, selon l'axe A longitudinal et par rapport à la chambre 3 de compression, du côté opposé à l'orifice 2 d'admission et du même côté que l'orifice 7 d'évacuation et la conduite 11 d'évacuation. (De préférence l'organe 21 d'actionnement est situé au-delà de cet orifice 7 d'évacuation en direction de la seconde extrémité).

Comme illustré l'orifice 2 d'admission et l'orifice 7 d'évacuation peuvent être situés à deux extrémités opposées de la chambre 3 de compression (selon la direction A longitudinale) .

Comme illustré, selon la direction A longitudinale, l'orifice 7 d'évacuation peut être situé entre d'une part l'orifice 2 d'admission (en partie inférieure sur la représentation schématique) et, d'autre part, la conduite 11 d'évacuation et/ou l'organe 21 d'actionnement (en partie supérieure sur la représentation schématique).

Cette configuration permet de localiser le guide 8 central fixe au niveau ou en-dessous d'un couvercle refermant l'extrémité supérieure de l'enceinte 13 au niveau de la seconde extrémité de l'appareil (extrémité supérieure par exemple). Par exemple, le guide 8 central est fixé à la partie supérieure (couvercle ou autre) de l'enceinte 13.

L'organe d'actionnement 21 (moteur ou autre) est avantageusement situé hors de l'enceinte 13, en partie supérieure de l'appareil de compression.

Ceci permet en outre de prévoir une course du piston 5 en traction vers la seconde extrémité de l'appareil lors de la phase de compression (traction en direction de l'extrémité supérieure dans cet exemple).

Au contraire, dans l'art antérieur mentionné précédemment, deux systèmes d'étanchéités haute pression dynamiques étaient prévus de part et d'autre de la chambre selon la course de déplacement du piston 5.

Cet agencement réduit fortement les contraintes de fabrication de maintenance et le risque de fuite par rapport à l'art antérieur.

L'orifice 7 d'évacuation peut être situé au niveau de l'extrémité terminale du guide 8 central (extrémité supérieure fixe de la chambre 3 de compression). L'appareil 1 peut comprendre une conduite 11 d'évacuation du gaz comprimé comprenant une première extrémité reliée à cet orifice 7 d'évacuation et une seconde extrémité située en partie supérieure de l'appareil 1 pour collecter le fluide à haute pression comprimé.

Comme illustré à la [Fig. 1], l'appareil de compression peut être logé dans une enceinte 13 étanche isolée thermiquement et contenant un bain 16 de fluide cryogénique de refroidissement.

En particulier, au moins la chambre 3 de compression peut être immergée dans une phase liquide. La partie supérieure de l'enceinte 16 peut comporter un ciel gazeux qui récupère les éventuelles fuites dans l'appareil 1.

Ainsi, la tête froide de l'appareil 1 peut être immergée verticalement dans une bain cryogénique (parfois appelé puisard).

La chambre 3 de compression pourrait être fixée directement au fond du bain.

La partie mobile (piston 5) a de préférence un mouvement vertical (vers le haut et vers le bas).

Un exemple de cycle de compression va à présent être décrit.

En partant d'une position extrême haute du piston 5 (chambre 3 de compression vide), le déplacement du piston 5 vers le bas va provoquer l'ouverture du système 2 d'admission et l'entrée de fluide froid à basse pression dans la chambre 3 de compression.

Après la position extrême basse du piston 5, celui-ci est remonté. A mesure que le piston 5 est remonté, le fluide qui a rempli la chambre 3 de compression se trouve piégé et comprimé.

Lorsque la pression dans la chambre 3 de compression devient supérieure à la pression déterminée en aval (par exemple 20 à 1000 bars, selon l'application), le système 7 d'évacuation s'ouvre, vidant le fluide à haute pression vers le haut via la conduite 11 d'évacuation.

L'appareil revient à la configuration de départ et peut recommencer un cycle.

Cette architecture avec une course de compression et la séparation des parties froides (en bas) et chaude (en haut) permet un meilleur fonctionnement de la compression. La relative grande distance entre l'admission en bas et l'évacuation en haut favorise cet avantage.

En effet, l'admission de fluide est réalisée au niveau où le fluide est le plus froid et le plus dense tandis que les fluides plus chauds sont déportés vers le haut. Ceci minimise les risques de mélange et d'ébullition du bain 16. Les fluides chauds (fuites) peuvent être collectés directement en partie haute sans nécessité de tuyauterie dédiée.

Ce mode de réalisation préféré n'est cependant nullement limitatif. En variante l'axe A longitudinal pourrait être horizontal en configuration de fonctionnement ou incliné pour inverser les positions verticales relatives décrites ci-dessus.

L'ensemble peut être logé dans un carter.

Un appareil 1 de compression de ce type (ou plusieurs en série ou en parallèle) peut être utilisé dans toute installation cryogénique nécessitant de pomper ou comprimer un fluide cryogénique.

Par exemple, une station de remplissage de réservoirs de gaz sous pression (hydrogène par exemple) peut comprendre une source 17 de gaz liquéfié, un circuit 18 de soutirage ayant une première extrémité reliée à la source et au moins une seconde extrémité destinée à être raccordée à un réservoir 190 à remplir, le circuit 18 de soutirage comprenant un tel appareil 1 de pompage. Le fluide pompé peut être vaporisé dans un échangeur 19 en aval et éventuellement stocké dans un ou plusieurs réservoirs 20 tampon sous pression.

## Revendications

1. Appareil (1) de compression de fluide cryogénique à un étage de compression comprenant un carter abritant une chambre (3) de compression, un système (2) d'admission communiquant avec la chambre (3) de compression configuré pour permettre l'entrée de fluide à comprimer dans ladite chambre (3) de compression, un piston (5) mobile pour assurer la compression du fluide dans la chambre (3) de compression, un organe d'actionnement (21) pour entraîner le piston (5), l'appareil (1) comprenant en outre un orifice (7) d'évacuation configuré pour permettre la sortie de fluide comprimé de la chambre (3) de compression vers une conduite (11) d'évacuation, la chambre (3) de compression étant délimitée par une portion du corps du piston (5) et une paroi fixe de l'appareil (1), le piston (5) étant mobile en translation selon une direction (A) longitudinale, le piston (5) comportant une portion tubulaire montée autour un guide (8) central fixe, une première extrémité terminale du guide (8) central formant la paroi fixe délimitant une partie de la chambre (3) de compression, l'appareil (1) comprenant un système d'étanchéité (10) formé entre le guide (8) central et le piston (5), dans lequel, selon la direction (A) longitudinale de translation du piston (5), le système (2) d'admission est situé à une première extrémité de l'appareil (1), l'organe d'actionnement (21) étant situé au niveau d'une seconde extrémité de l'appareil (1), **caractérisé en ce que** l'orifice (7) d'évacuation est situé entre le système (2) d'admission et l'organe (21) d'actionnement.

2. Appareil selon la revendication 1, **caractérisé en ce que** l'intégralité de la chambre (3) de compression est contenue dans la portion tubulaire du piston (5).

3. Appareil selon la revendication 1 ou 2, **caractérisé en ce que**, en configuration de fonctionnement de l'appareil (1) de compression, la direction (A) longitudinale de translation du piston est verticale, le système (2) d'admission étant situé à une extrémité inférieure de l'appareil (1), la conduite d'évacuation (11) s'étendant vers une extrémité supérieure de l'appareil (1).

4. Appareil selon l'une quelconque des revendications 1 à 3, **caractérisé en ce que**, selon la direction (A) longitudinale, une première extrémité de la chambre (3) de compression est délimitée par une première extrémité du piston (5) tubulaire et une seconde extrémité de la chambre (3) de compression est délimitée par la première extrémité terminale du guide (8) central et le système d'étanchéité (10) formé entre le guide (8) central et le piston (5), ledit le système d'étanchéité (10) étant situé au niveau ou adjacent à la première extrémité terminale du guide (8) central.

5. Appareil selon l'une quelconque des revendications 1 à 4, **caractérisé en ce que** le système d'étanchéité (10) formé entre le guide (8) central et le piston (5) est situé uniquement au niveau de la seconde extrémité de la chambre (3) de compression et/ou au-delà de cette seconde extrémité en direction de la seconde extrémité de l'appareil (1) selon la direction longitudinale.

6. Appareil selon l'une quelconque des revendications 1 à 5, **caractérisé en ce que** l'orifice (7) d'évacuation est situé au niveau de la première extrémité terminale du guide (8) central, l'appareil (1) comprenant une conduite (11) d'évacuation du fluide comprimé comprenant une première extrémité reliée à l'orifice (7) d'évacuation et une seconde extrémité située au niveau de la seconde extrémité de l'appareil (1).

7. Appareil selon l'une quelconque des revendications 1 à 6, **caractérisé en ce que** le système (2) d'admission est situé à une première extrémité du piston (5).

8. Appareil selon l'une quelconque des revendications 1 à 7, **caractérisé en ce que** le système (2) d'admission comprend au moins l'un parmi: un ou plusieurs clapets anti-retour, un ou plusieurs orifices ou lumière(s), au moins un clapet à disque plat ou vanne(s) configurés pour assurer l'entrée de fluide à comprimer dans la chambre (3) de compression lors d'une phase d'admission et empêcher la sortie de fluide en phase de compression.

9. Appareil selon l'une quelconque des revendications 1 à 8, **caractérisé en ce que** la compression du fluide dans la chambre (3) de compression est provoquée par une course du piston (5) en direction de la seconde extrémité de l'appareil (1).

10. Appareil selon l'une quelconque des revendications 1 à 9, **caractérisé en ce qu'**il comprend une enceinte (16) étanche contenant un bain (13) de fluide cryogénique de refroidissement, ledit piston (5) étant disposé dans le bain (16).

11. Station de remplissage de réservoirs de gaz sous pression comprenant une source (17) de gaz liquéfié, notamment d'hydrogène liquéfié, un circuit (18) de soutirage ayant une première extrémité reliée à la source et au moins une seconde extrémité destinée à être raccordée à un réservoir (190) à remplir, le circuit (18) de soutirage comprenant un appareil (1) de compression de fluide cryogénique conforme à l'une quelconque des revendications 1 à 10.

## Patentansprüche

1. Verdichtungsgerät (1) für ein kryogenes Fluid mit einer Verdichtungsstufe, beinhaltend ein Gehäuse, das eine Verdichtungskammer (3) aufnimmt, ein Einlasssystem (2), das mit der Verdichtungskammer (3) kommuniziert und dazu konfiguriert ist, den Eintritt von zu verdichtendem Fluid in die Verdichtungskammer (3) zu gestatten, einen bewegbaren Kolben (5), um die Verdichtung des Fluids in der Verdichtungskammer (3) zu gewährleisten, ein Betätigungsorgan (21), um den Kolben (5) anzutreiben, wobei das Gerät (1) ferner eine Auslassöffnung (7) beinhaltet, die dazu konfiguriert ist, den Austritt von verdichtetem Fluid aus der Verdichtungskammer (3) in eine Auslassleitung (11) zu gestatten, wobei die Verdichtungskammer (3) durch einen Abschnitt des Körpers des Kolbens (5) und eine feste Wand des Geräts (1) begrenzt wird, wobei der Kolben (5) gemäß einer Längsrichtung (A) translatorisch bewegbar ist, wobei der Kolben (5) einen rohrförmigen Abschnitt umfasst, der um eine feste mittige Führung (8) herum montiert ist, wobei ein erstes Abschlussende der mittigen Führung (8) die feste Wand bildet, die einen Teil der Verdichtungskammer (3) begrenzt, wobei das Gerät (1) ein Dichtungssystem (10) beinhaltet, das zwischen der mittigen Führung (8) und dem Kolben (5) gebildet ist, wobei sich das Einlasssystem (2) gemäß der Translationslängsrichtung (A) des Kolbens (5) an einem ersten Ende des Geräts (1) befindet, wobei sich das Betätigungsorgan (21) im Bereich eines zweiten Endes des Geräts (1) befindet, **dadurch gekennzeichnet, dass** sich die Auslassöffnung (7) zwischen dem Einlasssystem (2) und dem Betätigungsorgan (21) befindet.

2. Gerät nach Anspruch 1, **dadurch gekennzeichnet, dass** die gesamte Verdichtungskammer (3) in dem rohrförmigen Abschnitt des Kolbens (5) enthalten ist.

3. Gerät nach Anspruch 1 oder 2, **dadurch gekennzeichnet, dass** in der Betriebskonfiguration des Verdichtungsgeräts (1) die Translationslängsrichtung (A) des Kolbens vertikal ist, wobei sich das Einlasssystem (2) an einem unteren Ende des Geräts (1) befindet, wobei sich die Auslassleitung (11) zu einem oberen Ende des Geräts (1) erstreckt.

4. Gerät nach einem beliebigen der Ansprüche 1 bis 3, **dadurch gekennzeichnet, dass** gemäß der Längsrichtung (A) ein erstes Ende der Verdichtungskammer (3) durch ein erstes Ende des rohrförmigen Kolbens (5) begrenzt wird und ein zweites Ende der Verdichtungskammer (3) durch das erste Abschlussende der mittigen Führung (8) und das Dichtungssystem (10), das zwischen der mittigen Führung (8) und dem Kolben (5) gebildet ist, begrenzt wird, wobei sich das Dichtungssystem (10) im Bereich des ersten Abschlussendes der mittigen Führung (8) oder an dieses angrenzend befindet.

5. Gerät nach einem beliebigen der Ansprüche 1 bis 4, **dadurch gekennzeichnet, dass** sich das Dichtungssystem (10), das zwischen der mittigen Führung (8) und dem Kolben (5) gebildet ist, nur im Bereich des zweiten Endes der Verdichtungskammer (3) und/oder jenseits dieses zweiten Endes in Richtung des zweiten Endes des Geräts (1) gemäß der Längsrichtung befindet.

6. Gerät nach einem beliebigen der Ansprüche 1 bis 5, **dadurch gekennzeichnet, dass** sich die Auslassöffnung (7) im Bereich des ersten Abschlussendes der mittigen Führung (8) befindet, wobei das Gerät (1) eine Auslassleitung (11) für das verdichtete Fluid beinhaltet, die ein erstes Ende, das mit der Auslassöffnung (7) verbunden ist, und ein zweites Ende, das sich im Bereich des zweiten Endes des Geräts (1) befindet, beinhaltet.

7. Gerät nach einem beliebigen der Ansprüche 1 bis 6, **dadurch gekennzeichnet, dass** sich das Einlasssystem (2) an einem ersten Ende des Kolbens (5) befindet.

8. Gerät nach einem beliebigen der Ansprüche 1 bis 7, **dadurch gekennzeichnet, dass** das Einlasssystem (2) mindestens eines von Folgendem beinhaltet: ein oder mehrere Rückschlagventile, ein oder mehrere Öffnungen oder Lumen, mindestens einen Flachscheibenschieber oder ein oder mehrere Ventile, die dazu konfiguriert sind, während einer Einlassphase den Eintritt von zu verdichtendem Fluid in die Verdichtungskammer (3) zu gewährleisten und während einer Verdichtungsphase den Austritt von Fluid zu verhindern.

9. Gerät nach einem beliebigen der Ansprüche 1 bis 8, **dadurch gekennzeichnet, dass** die Verdichtung des Fluids in der Verdichtungskammer (3) durch einen Hub des Kolbens (5) in Richtung des zweiten Endes des Geräts (1) bewirkt wird.

10. Gerät nach einem beliebigen der Ansprüche 1 bis 9, **dadurch gekennzeichnet, dass** es einen dichten Behälter (16) beinhaltet, der ein Bad (13) mit einem kryogenen Kühlfluid enthält, wobei der Kolben (5) in dem Bad (16) angeordnet ist.

11. Station zum Befüllen von Tanks mit Druckgas, beinhaltend eine Quelle (17) mit flüssigem Gas, insbesondere flüssigem Wasserstoff, einen Entnahmekreislauf (18), der ein erstes Ende, das mit der Quelle verbunden ist, und mindestens ein zweites Ende, das dazu bestimmt ist, an einen zu befüllenden Tank (190) angeschlossen zu werden, aufweist, wobei der Entnahmekreislauf (18) ein Verdichtungsgerät (1) für ein kryogenes Fluid nach einem beliebigen der Ansprüche 1 bis 10 beinhaltet.

## Claims

1. Cryogenic-fluid compression apparatus (1) with a compression stage, comprising a casing housing a compression chamber (3), an intake system (2) that communicates with the compression chamber (3) and is configured to allow the admission of fluid to be compressed into said compression chamber (3), a mobile piston (5) for ensuring the compression of the fluid in the compression chamber (3), an actuating member (21) for driving the piston (5), the apparatus (1) also comprising a discharge orifice (7) configured to allow compressed fluid to leave the compression chamber (3) towards a discharge duct (11), the compression chamber (3) being delimited by a portion of the body of the piston (5) and a fixed wall of the apparatus (1), the piston (5) being mobile in a translational movement in a longitudinal direction (A), the piston (5) comprising a tubular portion mounted around a fixed central guide (8), a terminal first end of the central guide (8) forming the fixed wall delimiting part of the compression chamber (3), the apparatus (1) comprising a sealing system (10) formed between the central guide (8) and the piston (5), wherein, in the longitudinal direction (A) of translation of the piston (5), the intake system (2) is situated at a first end of the apparatus (1), the actuating member (21) being situated at a second end of the apparatus (1), **characterized in that** the discharge orifice (7) is situated between the intake system (2) and the actuating member (21).

2. Apparatus according to Claim 1, **characterized in that** the entirety of the compression chamber (3) is contained within the tubular portion of the piston (5).

3. Apparatus according to Claim 1 or 2, **characterized in that**, when the compression apparatus (1) is in an operating configuration, the longitudinal direction (A) of translation of the piston is vertical, the intake system (2) being situated at a lower end of the apparatus (1), the discharge duct (11) extending towards an upper end of the apparatus (1).

4. Apparatus according to any one of Claims 1 to 3, **characterized in that**, in the longitudinal direction (A), a first end of the compression chamber (3) is delimited by a first end of the tubular piston (5), and a second end of the compression chamber (3) is delimited by the terminal first end of the central guide (8) and the sealing system (10) formed between the central guide (8) and the piston (5), said sealing system (10) being situated level with or adjacent to the terminal first end of the central guide (8).

5. Apparatus according to any one of Claims 1 to 4, **characterized in that** the sealing system (10) formed between the central guide (8) and the piston (5) is situated only at the level of the second end of the compression chamber (3) and/or beyond this second end in the direction of the second end of the apparatus (1) in the longitudinal direction.

6. Apparatus according to any one of Claims 1 to 5, **characterized in that** the discharge orifice (7) is situated at the level of the terminal first end of the central guide (8), the apparatus (1) comprising a duct (11) for discharging the compressed fluid and comprising a first end connected to the discharge orifice (7) and a second end situated at the second end of the apparatus (1) .

7. Apparatus according to any one of Claims 1 to 6, **characterized in that** the intake system (2) is situated at a first end of the piston (5).

8. Apparatus according to any one of Claims 1 to 7, **characterized in that** the intake system (2) comprises at least one of the following: one or more nonreturn valves, one or more orifices or ports, at least one flat-disc valve or valves configured to admit fluid that is to be compressed into the compression chamber (3) during an intake phase and prevent fluid from leaving in the compression phase.

9. Apparatus according to any one of Claims 1 to 8, **characterized in that** the compression of the fluid in the compression chamber (3) is brought about by a stroke of the piston (5) in the direction of the second end of the apparatus (1).

10. Apparatus according to any one of Claims 1 to 9, **characterized in that** it comprises a sealed enclosure (16) containing a bath (13) of cryogenic cooling fluid, said piston (5) being situated in the bath (16).

11. Station for filling tanks with pressurized gas, comprising a source (17) of liquefied gas, in particular liquefied hydrogen, a withdrawal circuit (18) having a first end connected to the source and at least one second end intended to be connected to a tank (190) to be filled, the withdrawal circuit (18) comprising a cryogenic-fluid compression apparatus (1) according to any one of Claims 1 to 10.
